Europäisches Patentamt

European Patent Office

Office européen des brevets

(11) Publication number: 0 294 948
A2

# EUROPEAN PATENT APPLICATION

(21) Application number: 88304497.6

(22) Date of filing: 18.05.88

(51) Int. Cl.4: H01R 13/627 , H01R 13/639 , H01R 13/506

(30) Priority: 27.05.87 GB 8712435

(43) Date of publication of application:
14.12.88 Bulletin 88/50

(84) Designated Contracting States:
BE DE ES FR IT NL SE

(71) Applicant: TRW United-Carr Ltd.
Buckingham Road
Aylesbury Buckinghamshire HP19 3QA(GB)

(72) Inventor: Barnett, Barry Roger Michael
20 Bedwyn Walk
Aylesbury Buckinghamshire(GB)
Inventor: Ferguson, Edward Harry Frederick
26 Broughton Avenue
Aylesbury Buckinghamshire HP20 1QB(GB)

(74) Representative: Abbie, Andrew Kenneth et al
R.G.C. Jenkins & Co. 26 Caxton Street
London SW1H 0RJ(GB)

(54) Socket assembly.

(57) A socket assembly 18 for making a push-fit coupling with a spigot end of a tube 12 comprises a socket portion 22, a snap cap 44 fitted to the socket portion and having a central hub 64 extending both axially and radially inwardly of the mouth of the socket portion, and a gripper member 42 retained in the socket portion by the abutment member. The gripper member has gripping projections 74 through which the spigot end of the tube can pass on making a push-fit coupling with the socket assembly, but which are urged by the central hub 64 of the snap cap into gripping engagement with the outer wall of the spigot and of the tube to retain the tube in the socket assembly when the coupling of the socket assembly and tube is subjected to a tensile force markedly greater than the compressive force required to push-fit the tube into the socket assembly.

FIG.1.

## SOCKET ASSEMBLY

This assembly relates to a socket assembly for making a coupling with a spigot.

In certain applications, such as in fuel or hydraulic lines in a motor vehicle, it is a requirement that the spigot of a spigot and socket coupling should be retained in the socket when the coupling is subjected to tensile forces up to a predetermined value. For installation purposes, it is also desirable that such couplings can be made as quickly as possible.

An object of this invention is to provide a socket assembly which enables such a coupling to be made by push-fitting a socket assembly and spigot together with a compressive force which is less than the tensile force that the coupling has to withstand.

To this end, the invention includes a socket assembly for making a push-fit coupling with a spigot, said assembly comprising a socket portion, an abutment member fitted to said socket portion and extending radially inwardly of the mouth thereof, and a gripper member retained in said socket portion by said abutment member, said gripper member comprising gripping means through which a spigot to be coupled with said assembly can pass on making of a push-fit coupling therewith, which gripping means are arranged to be urged by said abutment member into gripping engagement with the outer wall of a spigot so coupled therewith to retain the spigot in the assembly on relative axial movement apart of said assembly and spigot.

The gripper member may comprise engagement means arranged for sufficiently engaging the spigot that the gripper member will move relative to the socket portion on relative axial movement apart of said assembly and a spigot received therein to cause said gripping means to be urged into said gripping engagement with the outer wall of the spigot by said abutment member on said relative axial movement apart of said assembly and spigot.

Preferably the gripping means are disposed so as not to engage said spigot outer wall when said spigot is inserted into said assembly. It will be appreciated that not only does such an arrangement mean that the compressive force required for push-fitting the socket assembly and spigot together have only to overcome the resistance of the engagement means and not the engagement means and the gripping means but also the possibility of the gripping means scoring the outer wall of the spigot whilst the coupling is being made is reduced.

The gripping means may comprise circumferentially spaced projections located axially inwardly of said abutment member and extending radially and axially inwardly for gripping engagement with the outer wall of a spigot received in said assembly. These projections may be carried by respective radially outwardly and axially inwardly extending carrier portions of said gripper member, which carrier portions are arranged for deflection radially inwardly by the abutment member on said relative axial movement apart of said assembly and a spigot received therein. In such a case, advantageously a radially inwardly facing surface of the abutment member tapers radially outwardly towards the axially inner end thereof for engagement with said carrier portions.

The carrier portions may be disposed intermediate said projections and a sleeve portion of said gripper member didposed axially outwardly of said projections. The sleeve portion may be split axially and furthermore may be formed with radially and axially inwardly directed barbs which provide said engagement means.

Preferably abutments extend radially outwardly of said projections for engagement with an axially inwardly facing surface of the abutment member on said relative axial movement apart of said assembly and a spigot received therein. Such an arrangement not only retains the gripper member within the socket assembly, but also causes the projections to pivot into steeper engagement with the outer wall of the spigot. This latter feature has been found to be particularly advantageous when the spigot is formed of a material which is deformable, for example when the spigot comprises the end of a plastics tube.

Whilst the abutment member may take any configuration and may be fitted either to the inside or outside of the socket portion, it preferably comprises an annular cap which is fitted to the outside of the socket portion.

Again whilst the cap may be fitted to the outside of the socket portion by any suitable means, preferably it is snap-fitted thereto. To this end, the socket portion may include a plurality of circumferentially spaced axially inwardly directed and radially inwardly deflectable elements provided with respective axially inwardly facing surfaces against which corresponding axially outwardly facing surfaces of said cap abut. Furthermore, the cap may be provided with apertures aligned with said axially outwardly facing surfaces thereof for providing access to said elements to enable them to be deflected radially inwardly out of abutment with said axially outwardly facing surfaces of said cap for removing said cap from said assembly.

Additionally, the cap and socket portion may be provided with cooperating alignment means for aligning said axially inwardly facing surfaces of the deflectable elements of the socket portion with the corresponding axially outwardly facing surfaces of said cap for snap-fitting of the cap to the socket portion.

The above-defined socket assembly may be incorporated in any desired coupling fitting. For example, not only may the socket assembly be provided at one end of a spigot and socket coupling fitting as shown in the preferred embodiment to be described hereinafter, it may also be incorporated in a TEE coupling or an elbow. Furthermore, a coupling fitting may incorporate more than one such socket assembly -the simplest example being a straight-through coupling fitting comprising oppositely directed socket assemblies. It is also envisaged that the socket assembly may be an integral part of a piece of apparatus to which a spigot has to be coupled, for example the socket assembly may be integral with a hydraulic fluid reservoir.

In order that the invention may be well understood, an embodiment thereof will now be described by way of example only, with reference to the accompanying drawings, in which:

Figure 1 is an axial cross-section of part of a hydraulic fluid line including a spigot and socket coupling made with a socket assembly;

Figure 2 is a side view, partly in axial cross-section of a socket portion of the socket assembly;

Figure 3 is an end view of the socket portion;

Figure 4 is a side view, partly in axial cross-section, of an abutment member of the socket assembly;

Figure 5 is an end view of the abutment member;

Figure 6 is a side view, partly in axial cross-section of a gripper member of the socket assembly;

Figure 7 is an end view of the gripper member; and

Figure 8 is a perspective view of a coupling comprising the socket assembly and a spigot, showing a de-coupling tool mounted ready for decoupling the coupling.

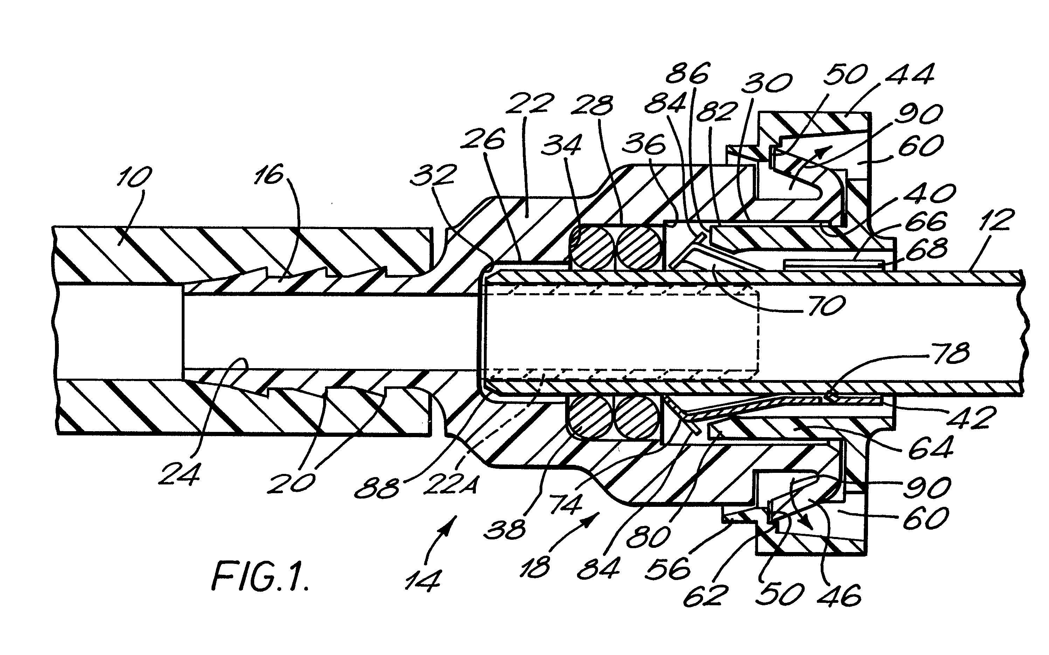

Referring first to Figure 1, there is shown part of a hydraulic fluid line of a motor vehicle in which a rubber or plastics tube 10 is connected to a metal tube 12 by a coupling fitting 14. The coupling fitting is provided with a spigot connector 16 at one axial end and a socket assembly 18 at the other end. The spigot connector 16 is provided with external circumferential serrations 20 for gripping the interior of the tube 10 as illustrated. The end portion of the metal tube 12 is received as a spigot in the socket assembly 18 to form a spigot and socket coupling therewith.

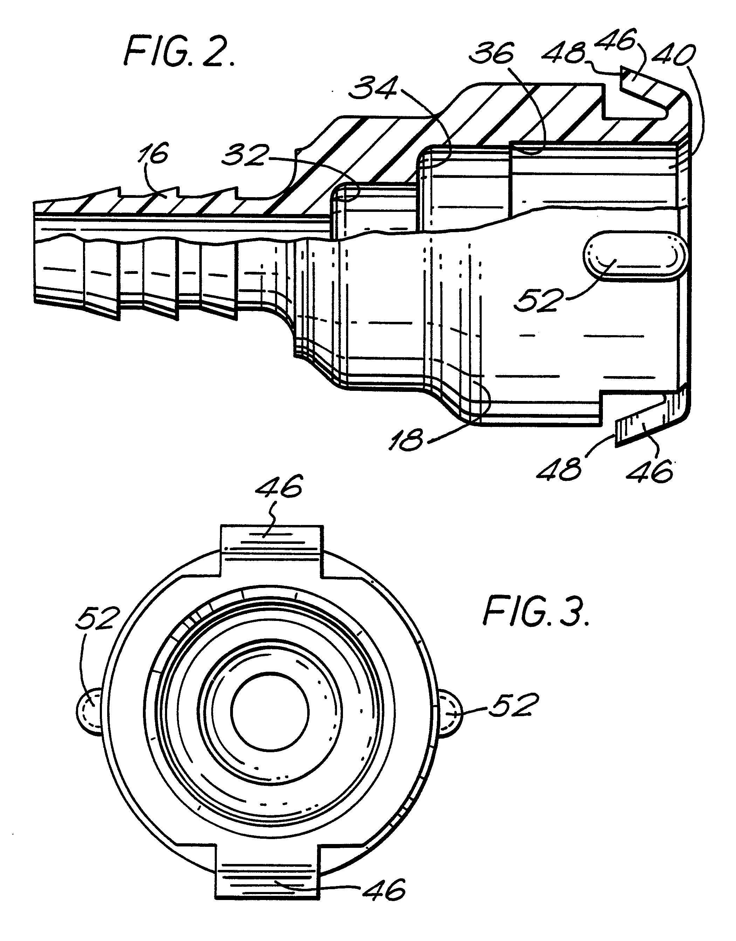

The socket assembly 18 comprises a socket portion 22 which is integral with the spigot connector 16 and injection moulded in a suitable plastics material, for example polybutylene terephthalate (P.B.T.). This integral moulding is shown separately in Figures 2 and 3. Bore 24 of the spigot connector 16 extends through the socket portion 22 and is successively enlarged over three axial portions 26,28 and 30 thus forming respective annular radial shoulders 32,34 and 36. The radial shoulder 32 provides an abutment stop for the end of the metal tube 12 and the radial shoulder 34 provides a location for the axially inner of two annular sealing rings 38, which are located in the portion 28 of the socket portion to provide a seal between the exterior of the metal tube and the socket portion.

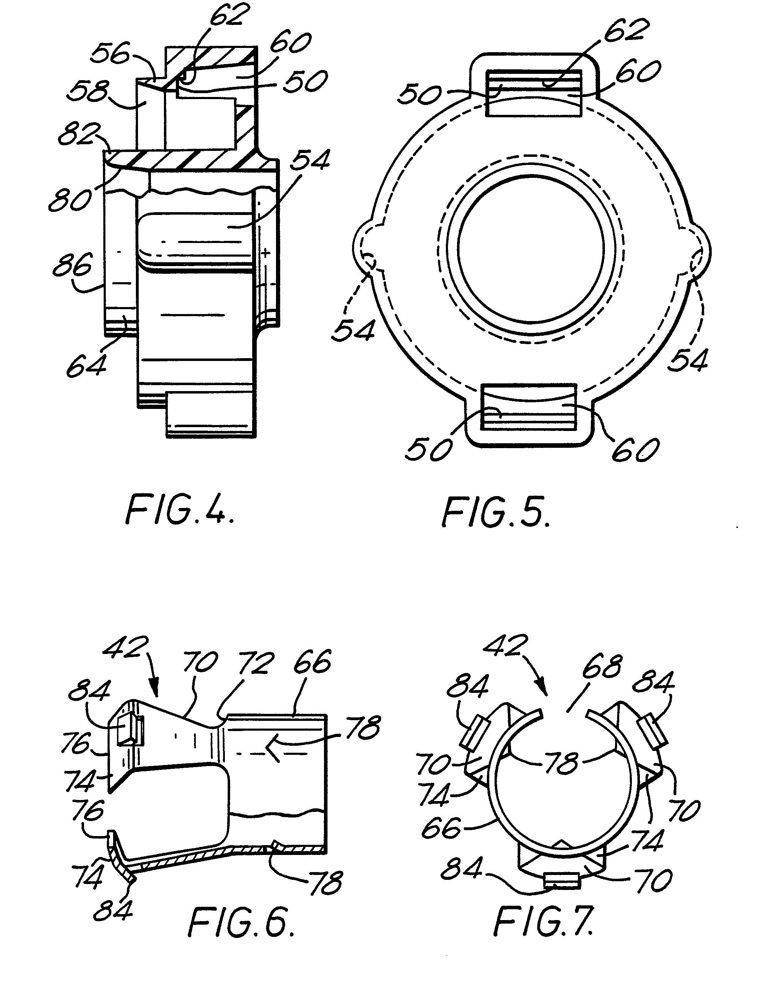

An abutment member is fitted to the socket portion and extends radially inwardly of the mouth 40 thereof to retain a gripper member 42 in the socket portion. The abutment member, which is shown separately in Figures 4 and 5, comprises a snap cap 44 which is snap-fitted to the outside of the socket portion. More particularly as better shown in Figures 2 and 3, the socket portion includes two diametrically opposed axially inwardly directed, radially inwardly deflectable elements 46 provided with respective axially inwardly facing surfaces 48 against which corresponding axially outwardly facing surfaces 50 of the snap cap 44 abut after the cap has been snap-fitted to the socket portion. The cap 44 and the socket portion 18 are provided with cooperating alignment means for aligning the surfaces 48 of the deflectable elements 46 with the surfaces 50 of the cap for snap-fitting of the cap to the socket portion. As illustrated, these alignment means comprise diametrically opposed axially extending ribs 52 on the socket portion and corresponding channels 54 in the snap cap. As will be appreciated the elements 46 are deflected radially inwardly by the axially inner portion 56 of the snap cap is pushed onto the socket portion. To assist this deflection, the axially inner portion 56 may have a frustoconical inner surface 58 as illustrated.

It is to be understood that whilst the illustrated embodiment is provided with two elements 46, any number of such elements, circumferentially spaced around the socket portion may be provided, the snap cap being suitably modified to cooperate therewith. However, the provision of just two such elements is considered sufficient and is presently preferred.

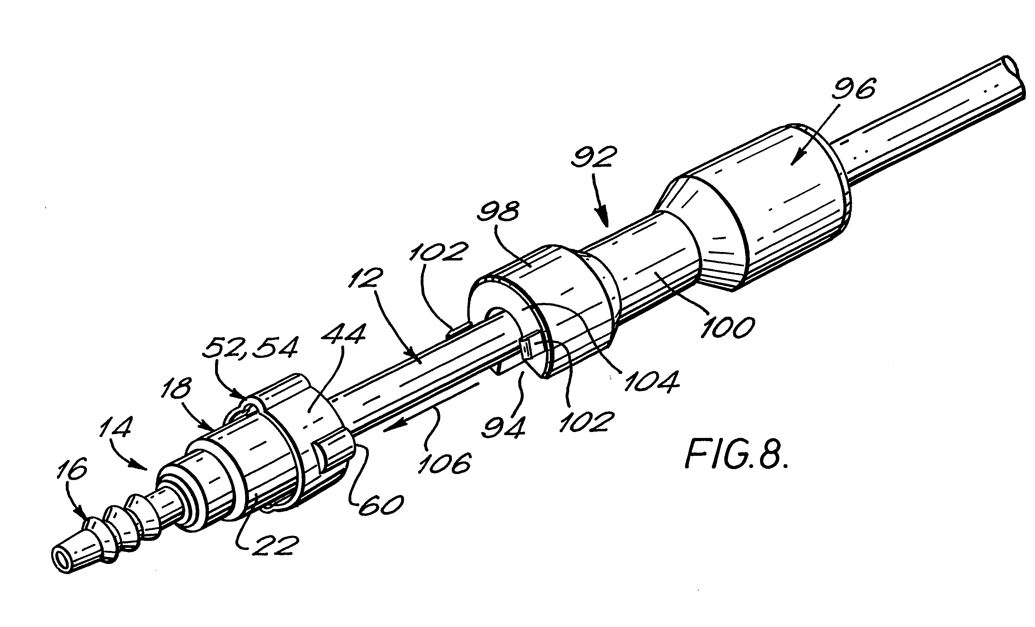

The snap cap 44 is provided with apertures 60 aligned with the surfaces 50 against which the surfaces 48 of the element abut to provide access to the elements 46 to enable them to be deflected radially inwardly out of abutment with the surfaces 50 of the cap for removal of the cap from the socket assembly. Such removal will be discussed in more detail hereinafter with reference to Figure 8.

The cap is provided with a radially inwardly facing, axially extending surface 62 radially outwardly of each surface 50 for limiting any movement of the elements radially outwardly thereof.

The snap cap carries a central tubular hub 64 which extends into the portion 30 of the socket portion for cooperation with the gripper member 42.

Although the snap cap 44 itself need not be resilient, it is presently preferred to form the snap cap from a resilient plastics material such as P.B.T.

The gripper member 42, which is shown separately in Figures 6 and 7 is formed of stainless steel and comprises a sleeve portion 66 which is shown as being split axially at 68. Three radially outwardly and axially inwardly extending carrier portions 70 project from the axially inner end 72 of the sleeve portion 66 and carry respective radially and axially inwardly extending gripping projections 74. The edge surfaces 76 of the free ends of the projections 74 are arcuate for gripping engagement with the outer wall of the tube 12. However, in an unstressed condition, these edges 76 are disposed so as not to engage the outer wall of the tube 12, thus facilitating insertion of the end of the tube 12 into the socket assembly.

The sleeve portion 66 of the gripper member is formed with circumferentially spaced apart, radially and axially inwardly directed barbs 78 which are arranged for sufficiently engaging the outer wall of the metal tube 12 that the gripper member will move relative to the socket portion of the socket assembly on relative axial movement apart of the socket assembly and the metal tube. The carrier portions 70 are arranged for engagement with the central hub 64 of the snap cap such that relative axial movement apart of the socket assembly and metal tube causes the projections 74 to be urged into gripping engagement with the outer wall of the metal tube. To this end, the hub 64 is provided with a radially inwardly facing surface 80 which tapers radially outwardly towards the axially inner end 82 of the hub for engagement with the carrier portions 70.

Additionally, a respective abutment 84 extends radially outwardly of each projection 74 for engagement with an axially inwardly facing surface 86 of the axially inner end 82 of the hub 64 on relative axial movement apart of the assembly and tube. To assemble the socket assembly it is merely necessary to sequentially insert the two sealing rings 38 and the gripper member 42 into the socket portion 22 and thereafter snap-fit the cap 44 to the outside of the socket portion. It will be noted that it is impossible to assemble the separate parts of the socket assembly other than in the correct order or with the gripper member with the sleeve 42 axially inwardly of the projections 74.

To couple the tube 12 to the coupling fitting 14, the end of the tube 12 is merely pushed into the socket assembly until the end of the tube 12 abuts the shoulder 32 in the socket portion. To assist insertion of the tube into the socket assembly the edge of the tube may be chamfered as indicated at 88. It will be understood that whilst the tube is being pushed into the socket assembly, the projections 74 of the gripper member are in an unstressed condition and the edges 76 thereof are out of engagement with the outer wall of the tube. Thus, the only frictional resistance to the insertion of the tube into the socket assembly is that provided by the engagement of the sealing rings 38 and the barbs 78 on the outer wall of the metal tube. Typically, a compressive force of 80 Newtons or less is required to push-fit the socket assembly 18 and tube 12 together. However, once push-fitted together, the gripper member acts to retain the tube in the assembly against tensile forces far greater than the compressive force needed to push-fit the socket assembly and tube together. Typically, the gripper member is able to retain the tube within the socket assembly against tensile forces of up to 200 Newtons. When the socket assembly 18 and tube 12 are subjected to a tensile load tending to withdraw the tube from the socket assembly, a small amount of relative axial movement apart of the assembly and tube occurs. The gripper member 42 moves relative to the socket portion 22 of the socket assembly with the metal tube by virtue of the engagement of the outer wall of the tube by the barbs 78 causing the carrier portions 70 of the gripper member to be deflected radially inwardly by the tapering surface 80 of the central hub 64 of the snap cap as the gripper member 42 moves axially relative to the snap cap. This deflection of the carrier portion 70 urges the edges 76 of the projections 74 into gripping engagement with the outer wall of the tube to retain the tube in the assembly. The surface 80 may initially engage the carrier portions before any axial relative movement apart of the socket assembly and tube 12 takes place or alternatively the surface 80 and carrier portions may be spaced slightly from each other as illustrated.

Whilst the carrier portions 70 may be arranged so as to extend sufficiently radially outwardly that once the edges of the projections 74 engage with the metal tube the gripper member should not be pulled through the annular hub of the snap cap, the abutments 84 are arranged to engage the axially inwardly facing surface 86 of the hub to further prevent the gripper member 42 being moved through the central hub should the tensile force to which the coupling is subjected be sufficient to move those abutments into engagement with the surface 86. It will be appreciated that such engagement will also tend to pivot the projections 74 into steeper engagement with the outer wall of the tube, thus increasing their grip on the tube.

The provision of the abutments 84 on the gripper member enables the socket assembly to be coupled not only with a metal tube but also with a tube formed of a material which is deformable, for example a plastics tube. In this connection, it will be appreciated that when a coupling is made between a plastics tube and the socket assembly there is the possibility of the outer wall of the tube being deformed radially inwardly by the projections 74 when the coupling is subjected to a tensile force, thus allowing the gripper member to be pulled through the central hub of the snap cap if means such as the abutments 84 are not provided to prevent this occurrence.

It is also proposed that the socket portion 22 could be provided with an integral support spigot 22A as indicated in dotted line in Figure 1 for supporting the tube to resist radially inward deformation by the projections.

When the coupling comprising the socket assembly and tube 12 is subjected to a tensile force, it will be appreciated that a tensile force will also exist tending to pull the snap cap 44 from the socket portion 22. Such a force will tend to rotate the elements 46 of the socket portion in the direction of the arrows 90 shown in Figure 1, but such rotation is limited by the snap cap surfaces 62 which thereby prevent the elements 'inverting', and ensures that the cap is retained on the socket portion.

It will be appreciated that in order to de-couple the tube 12 from the socket assembly it is necessary to remove the snap cap 44 from the socket portion 22. To do this, the elements 46 have to be simultaneously deflected radially inwardly out of abutment with the surfaces 50.

Referring now to Figure 8, a de-coupling tool 92 is illustrated mounted on the tube 12 ready for de-coupling the snap cap from the socket portion. The de-coupling tool 92 is formed of metal and comprises a generally tubular member provided with an axially extending slot 94 to enable the tool to be fitted onto the tube 12 in coaxial relationship therewith. The tool comprises a handle 96 at one end, a boss 98 at the other end and an intermediate portion 100 of reduced cross-section therebetween. Two diametrically opposed release lugs 102 project from the end 104 of the boss 98. The lugs 102 are positioned and dimensioned so as to extend into the apertures 60 in the snap cap and engage the elements 46 on movement of the tool 92 along the tube 12 in the direction of arrow 106.

Further movement of the tool in this direction causes the lugs 102 to deflect the elements radially inwardly out of abutment with the surface 50 enabling the cap to be removed from the socket assembly.

It will be appreciated that without the use of the tool shown in Figure 8, or a similar tool, de-coupling of the socket assembly and tube is difficult.

## Claims

1. A socket assembly for making a push-fit coupling with a spigot, said assembly comprising a socket portion, an abutment member fitted to said socket portion and extending radially inwardly of the mouth thereof, and a gripper member retained in said socket portion by said abutment member, said gripper member comprising gripping means through which a spigot to be coupled with said assembly can pass on making of a push-fit coupling therewith, which gripping means are arranged to be urged by said abutment member into gripping engagement with the outer wall of a spigot so coupled therewith to retain the spigot in the assembly on relative axial movement apart of said assembly and spigot.

2. An assembly as claimed in claim 1, wherein said gripper member comprises engagement means arranged for sufficiently engaging the spigot that the gripper member will move relative to the socket portion on relative axial movement apart of said assembly and a spigot received therein to cause said gripping means to be urged into said gripping engagement with the outer wall of the spigot by said abutment member on said relative axial movement apart of said assembly and spigot.

3 An assembly as claimed in claim 2, wherein said gripping means are disposed so as not to engage said spigot outer wall when said spigot is inserted into said assembly.

4. An assembly as claimed in any one of claims 1 to 3, wherein said gripping means comprises circumferentially spaced projections located axially inwardly of said abutment member and extending radially and axially inwardly for gripping engagement with the outer wall of a spigot received in said assembly.

5. An assembly as claimed in claim 4, wherein said projections are carried by respective radially outwardly and axially inwardly extending carrier portions of said gripper member, which carrier portions are arranged for deflection radially inwardly by the abutment member on said relative axial movement apart of said assembly and a spigot received therein.

5

6. An assembly as claimed in claim 5, wherein a radially inwardly facing surface of the abutment member tapers radially outwardly towards the axially inner and thereof for engagement with said carrier portions.

7. An assembly as claimed in claim 5 or 6, wherein said carrier portions are disposed intermediate said projections and a sleeve portion of said gripper member disposed axially outwardly of said projections.

8. An assembly as claimed in claim 7, wherein said sleeve portion is split axially.

9. An assembly as claimed in claim 7 or 8, wherein said sleeve portion provides said engagement means.

10. An assembly as claimed in claim 7 or 8, wherein said sleeve portion is formed with radially and axially inwardly directed barbs which provide said engagement means.

11. An assembly as claimed in any one of claims 4 to 10, wherein abutments extend radially outwardly of said projections for engagement with an axially inwardly facing surface of the abutment member on said relative axial movement apart of said assembly and a spigot received therein.

12. An assembly as claimed in any one of the preceding claims, wherein said abutment member comprises an annular cap which is fitted to the outside of the socket portion.

13. An assembly as claimed in claim 12, wherein said cap is snap-fitted to the outside of the socket portion.

14. An assembly as claimed in claim 13, wherein the socket portion includes a plurality of circumferentially spaced axially inwardly directed and radially inwardly deflectable elements provided with respective axially inwardly facing surfaces against which corresponding axially outwardly facing surfaces of said cap abut.

15. An assembly as claimed in claim 14, wherein said cap is provided with apertures aligned with said axially outwardly facing surfaces thereof for providing access to said elements to enable them to be deflected radially inwardly out of abutment with said axially outwardly facing surfaces of said cap for removing said cap from said assembly.

16. An assembly as claimed in claim 14 or 15, wherein said cap and socket portion are provided with cooperating alignment means for aligning said axially inwardly facing surfaces of the deflectable elements of the socket portion with the corresponding axially outwardly facing surfaces of said cap for snap-fitting of the cap to the socket portion.

17. An assembly as claimed in any one of the preceding claims, wherein annular seal means are provided in said socket portion axially inwardly of said gripper member.

18. A socket assembly for making a push-fit coupling with a spigot, said assembly comprising a socket portion (22), an abutment member (44) fitted to said socket portion and extending radially inwardly of the mouth thereof, and a gripper member (42) retained in said socket portion by said abutment member, said gripper member comprising gripping means (74) through which a spigot to be coupled with said assembly can pass on making of a push-fit coupling therewith, which gripping means are arranged to be urged by said abutment member into gripping engagement with the outer wall of a spigot so coupled therewith to retain the spigot in the assembly on relative axial movement apart of said assembly and spigot, said gripper member further comprising abutment means (84) associated with the gripping means (74) and arranged for engagement with an axially inwardly facing surface (86) of the abutment member on further relative axial movement apart of said assembly and spigot to limit movement of said gripper member through said abutment member and to urge said gripping means into increased gripping engagement with the outer wall of the spigot.

FIG.1.

EP 0 294 948 A2

FIG. 2.

FIG. 3.

FIG.4.

FIG.5.

FIG.6.

FIG.7.

FIG.8.

EP 0 294 948 A2